# EUROPÄISCHE PATENTANMELDUNG

(11) **EP 4 825 919 A1**
(43) Veröffentlichungstag der Anmeldung: **21.10.2026**
(21) Anmeldenummer: 25170433.4
(22) Anmeldetag: 14.04.2025
(51) Int. Cl.: C08L 69/00

(54) **FLAMMWIDRIGE FASERVERSTÄRKTE POLYCARBONATZUSAMMENSETZUNG**

(71) Anmelder: Covestro Deutschland AG, 51373 Leverkusen (DE)
(72) Erfinder: Heuer, Helmut Werner, 57074 Siegen (DE); Kaiser, Christian, 47918 Tönisvorst (DE)
(74) Vertreter: Levpat

(57) **Zusammenfassung**

Die vorliegende Erfindung betrifft eine Zusammensetzung, enthaltend lineares und verzweigtes Polycarbonat, eine Verstärkungsfaser und ein fluorfreies Flammschutzmittel, die sich durch eine Flammschutz-Klassifikation nach UL94 von V-0 bei einer Schichtdicke von 1,8 mm, bevorzugt 1,5 mm auszeichnet und eine hohe Wärmeformbeständigkeit aufweist, sowie einen Formkörper enthaltend diese Zusammensetzung.

## Beschreibung

Die vorliegende Erfindung betrifft eine faserverstärkte Polycarbonatzusammensetzung, die auch ohne Einsatz von halogenhaltigen Flammschutzmitteln eine gute Flammwidrigkeit und eine hohe Wärmeformbeständigkeit aufweist, sowie Formkörper enthaltend die Zusammensetzung.

Polycarbonatzusammensetzungen genießen breite Anwendungsmöglichkeiten. Sie müssen jedoch häufig insbesondere für dünnwandige Anwendungen zusätzlich mit Flammschutzmitteln additiviert werden, um die hohen Anforderungen an Flammschutzeigenschaften erfüllen zu können. Dabei stehen die Reduktion der Menge oder sogar Verbannung unterschiedlicher Flammschutzmittel immer wieder im Fokus, da je nach chemischer Natur der Flammschutzmittel diese als "besonders besorgniserregende Stoffe" (sogenannte *substances of very high cancern*, SVHC) eingestuft werden. Beispielsweise können halogenierte Flammschutzmittel unter Hitzeeinwirkung unerwünschte Halogenradikale und daraus resultierende Folgeprodukte freisetzen, die schädlich für die Umwelt sind. In vielen Ländern dieser Welt wird daher eine Verwendung solcher Flammschutzmittel vermieden. Ein gängiges Flammschutzmittel in Polycarbonatzusammensetzungen ist Kaliumperfluorbutansulfonat (auch Rimarsalz oder C4-Salz genannt). Einige PFAS (poly- und perfluorierte Alkylsubstanzen) gelten unter der europäischen Chemikalienverordnung REACH bereits als besonders besorgniserregende Stoffe, da sie sehr langlebig sind, sich in Organismen anreichern (Bioakkumulation) und für Menschen schädlich sein können. Für besonders besorgniserregende Stoffe gelten im Rahmen der REACH-Verordnung besondere Auskunftspflichten und es kann eine Zulassungspflicht entstehen, d. h. nur explizit zugelassene Verwendungen dürfen weiter genutzt werden.

Das Umweltbundesamt UBA hält derzeit, insbesondere unter Berücksichtigung des Vorsorgeprinzips, eine Regulierung der gesamten Stoffgruppe für notwendig, denn alle PFAS könnten für lange Zeiträume in der Umwelt verbleiben. Daher erarbeitet das UBA mit anderen Behörden aus Deutschland, den Niederlanden, Dänemark, Schweden und Norwegen einen EU-weiten Beschränkungsvorschlag unter REACH für diese Stoffgruppe.

Die European Chemicals Agency (ECHA) hat nun die Verbindung "Perfluorobutane sulfonic acid (PFBS) und seine Salze" auf die REACH Kandidaten-Liste der SVHC-Substanzen gesetzt. Damit ist auch das C4-Salz betroffen. Für lange Zeit wurde diese Verbindung zur reproduzierbar guten Flammwidrigkeitsverbesserung von Polycarbonatzusammensetzungen eingesetzt. Die Bereitstellung von Polycarbonatzusammensetzungen mit vergleichbarer Flammwidrigkeit aber unter Verwendung fluorfreier Flammschutzmittel stellt daher eine große Herausforderung dar.

In der WO2022/243222 A1 wird eine Zusammensetzung beschrieben, die lineares und verzweigtes Polycarbonat, eine Verstärkungsfaser und weniger als 1000 ppm eines Flammschutzmittels enthält.

Ausgehend von diesem Stand der Technik bestand die Aufgabe der vorliegenden Erfindung darin, eine Polycarbonat und eine Verstärkungsfaser enthaltende Zusammensetzung bereitzustellen, die frei von halogenierten Flammschutzmitteln und -synergisten ist und dabei gleichzeitig mindestens eine Flammwidrigkeit aufweist, welche der UL94 Klassifikation von V-0 bei 1,8 mm, bevorzugt bei 1,5 mm entspricht. Bevorzugt weist die Zusammensetzung weiterhin eine hohe Glühdrahtentzündungstemperatur und eine hohe Glühdrahtbrennbarkeitstemperatur als auch eine hohe Wärmeformbeständigkeit auf. Besonders bevorzugt ist die Schmelzeviskosität vergleichbar zu Zusammensetzungen aus dem Stand der Technik, um die Verarbeitungsbedingungen nicht zu verschlechtern.

Überraschend wurde gefunden, dass eine Kombination aus linearem und verzweigtem Polycarbonat, welches einen speziellen Verzweigungsgrad aufweist, einer speziellen Menge an einer Verbindung, ausgewählt aus der Gruppe bestehend aus Alkali-, Erdalkali- oder Ammoniumsalzen aliphatischer oder aromatischer Sulfonsäure-, Sulfonamid- oder Sulfonimidderivate und Kombinationen aus diesen sowie einer Verstärkungsfaser zu einer Flammwidrigkeit führt, welche mindestens einer UL94-Klassifikation von V-0 bei 1,8 mm, bevorzugt 1,5 mm, und einer UL94-5V-Klassifikation von 5VA bei 3 mm entspricht. Gleichzeitig weist diese erfinderische Zusammensetzung bei einer Probendicke von 1,5 bis 3 mm eine Glühdrahtentzündungstemperatur von mindestens 850 °C und eine Glühdrahtbrennbarkeitstemperatur von 960 °C auf. Die rheologischen Eigenschaften der Schmelze sind hingegen gegenüber flammgeschützten Zusammensetzungen aus dem Stand der Technik unverändert. Die erfindungsgemäße Zusammensetzung verzichtet auf den Einsatz einer Verbindung, die auf der SVHC-REACH-Liste der ECHA steht. Dabei ist es überraschend, dass bevorzugt auf weitere Additive zur Polycarbonatzusammensetzung verzichtet werden kann, welche häufig für die Erzielung von hoher Flammwidrigkeit bei dünnen Schichtdicken verwendet werden. Unter anderem weist die Zusammensetzung bevorzugt selbst kein Polytetrafluorethylen (PTFE), kein halogeniertes Flammschutzmittel und/oder auch kein Polysiloxan-Polycarbonat-Blockcokondensat auf.

Kein PTFE bedeutet, dass dies nicht der Zusammensetzung zugegeben wird. Dem Fachmann ist dabei bekannt, dass durch den Einsatz recyclierter Materialien oder Verunreinigungen im Herstellungsprozess der einzelnen Komponenten dennoch in Spuren an PTFE vorhanden sein können. Dementsprechend enthält die Zusammensetzung bevorzugt weniger als 0,1 Gew.-%, besonders bevorzugt weniger 0,01 Gew.-%, ganz besonders bevorzugt enthält sie kein PTFE.

Weiterhin enthält die Zusammensetzung bevorzugt weniger als 0,1 Gew.-%, besonders bevorzugt weniger 0,01 Gew.-%, ganz besonders bevorzugt enthält sie kein halogenhaltiges Flammschutzmittel.

Ebenso enthält die Zusammensetzung bevorzugt weniger als 1 Gew.-%, weiterhin bevorzugt weniger als 0,1 Gew.-%, besonders bevorzugt weniger 0,01 Gew.-%, ganz besonders bevorzugt enthält sie kein Polysiloxan-Polycarbonat-Blockcokondensat.

Erfindungsgemäß wird eine Zusammensetzung bereitgestellt, enthaltend:
(A) 40 bis 79,5 Gew.-% eines linearen Polycarbonats, wobei ein Teil in Pulverform als Komponente A1 vorliegen kann
(B) 5 bis 50 Gew.-% eines Polycarbonats mit einem Verzweigungsgrad von 0,8 bis 1,5 mol-%,
(C) 5 bis 40 Gew.-% einer Verstärkungsfaser und
(D) 0,10 bis 0,25 Gew.-% einer Verbindung, ausgewählt aus der Gruppe bestehend aus Alkali-, Erdalkali- oder Ammoniumsalzen aliphatischer oder aromatischer Sulfonsäure-, Sulfonamid-, oder Sulfonimidderivate und Kombinationen aus diesen,
(G) 0 bis 5 Gew.-% Farbmittel,
   wobei, für den Fall, dass mehr als 4 Gew-% der pulverförmige Komponente A1 enthalten sind, der Anteil der Komponente G > 0 Gew.-% ist, und
   wobei sich die Gew.-% auf die gesamte Zusammensetzung beziehen.
   .

Ein weiterer Gegenstand der vorliegenden Erfindung ist ein Formkörper enthaltend die erfindungsgemäße Zusammensetzung. Bevorzugt ist dabei, dass der Formkörper durch Spritzguss oder Extrusion hergestellt wird

### Komponente A

Komponente A ist ein lineares Polycarbonat. Erfindungsgemäß wird dabei der Begriff linear insbesondere zur Abgrenzung zur verzweigten Komponente B verwendet. Dem Fachmann sind lineare Polycarbonate bekannt. Ihm ist auch bekannt, dass viele als linear bezeichnete Polycarbonate einen geringen Anteil an Verzweigungen aufweisen können. Dies resultiert teilweise durch den Herstellungsprozess des Polycarbonats. Ein Beispiel für diese intrinsische Verzweigungen sind so genannte Fries-Strukturen, wie sie für Schmelzepolycarbonate in der EP 1 506 249 A1 beschrieben sind. Erfindungsgemäß bevorzugt bedeutet der Begriff linear, dass das Polycarbonat einen Verzweigungsgrad von ≤ 0,4 mol-% aufweist. Der Verzweigungsgrad ist dabei, wie unten zur Komponente B ausgeführt, definiert.

Bei der Komponente A handelt es sich bevorzugt um ein aromatisches Polycarbonat. Unter Polycarbonat im erfindungsgemäßen Sinne werden sowohl Homopolycarbonate als auch Copolycarbonate verstanden. Erfindungsgemäß können auch Mischungen von Polycarbonaten verwendet werden, wobei dann aber jede der einzelnen Komponenten linear sind.

Erfindungsgemäße Zusammensetzungen enthalten 40 bis 79,5 Gew.-% der Komponente A, bevorzugt 50 bis 70 Gew.-%, besonders bevorzugt 55 bis 65 Gew.-%.

Die Herstellung der linearen Polycarbonate, die in den Zusammensetzungen enthalten sind, erfolgt in bekannter Weise aus Dihydroxyarylverbindungen, Kohlensäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964; auf D. Freitag, U. Grigo, P.R. Müller, H. Nouvertné, BAYER AG, "Polycarbonates" in Encyclopedia of Polymer Science and Engineering, Volume 11, Second Edition, 1988, Seiten 648-718 und schließlich auf U. Grigo, K. Kirchner und P. R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Die Herstellung der Polycarbonate erfolgt z. B. durch Umsetzung von Dihydroxyarylverbindungen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern und gegebenenfalls unter Verwendung von trifunktionellen oder mehr als trifunktionellen Verzweigern. Ebenso ist eine Herstellung über ein Schmelzepolymerisationsverfahren durch Umsetzung von Dihydroxyarylverbindungen mit beispielsweise Diphenylcarbonat möglich.

Für die Herstellung der Polycarbonate geeignete Dihydroxyarylverbindungen sind beispielsweise Resorcin, Dihydroxydiphenyle, Bis(hydroxyphenyl)alkane, Bis(hydroxyphenyl)cycloalkane, Bis-(hydroxyphenyl)sulfide, Bis(hydroxyphenyl)ether, Bis(hydroxyphenyl)ketone, Bis(hydroxyphenyl)-sulfone, Bis(hydroxyphenyl)sulfoxide, α,α'-Bis(hydroxyphenyl)diisopropylbenzole, Phthalimidine, abgeleitet von Isatin- oder Phenolphthaleinderivaten, sowie deren kernalkylierte und kernarylierte Verbindungen.

Bevorzugte Dihydroxyarylverbindungen sind 4,4'-Dihydroxydiphenyl, 2,2-Bis(4-hydroxyphenyl)-propan (Bisphenol A, BPA), 2,4-Bis(4-hydroxyphenyl)-2-methylbutan, 1,1-Bis(4-hydroxyphenyl)-p-diisopropylbenzol, 2,2-Bis(3-methyl-4-hydroxyphenyl)propan (Dimethyl-Bisphenol A, Bisphenol C), Bis(3,5-dimethyl-4-hydroxyphenyl)methan, 2,2-Bis(3,5-dimethyl-4-hydroxyphenyl)propan, Bis(3,5-dimethyl-4-hydroxyphenyl)sulfon, 2,4-Bis(3,5-dimethyl-4-hydroxyphenyl)-2-methylbutan, 1,1-Bis-(3,5-dimethyl-4-hydroxyphenyl)-p-diisopropylbenzol, 9,9-Bis(4-hydroxyphenyl)fluoren (Bisphenol FL) und 1,1-Bis(4-hydroxyphenyl)-3,3,5-trimethylcyclohexan, sowie die Bisphenole (Aa) bis (Ca): 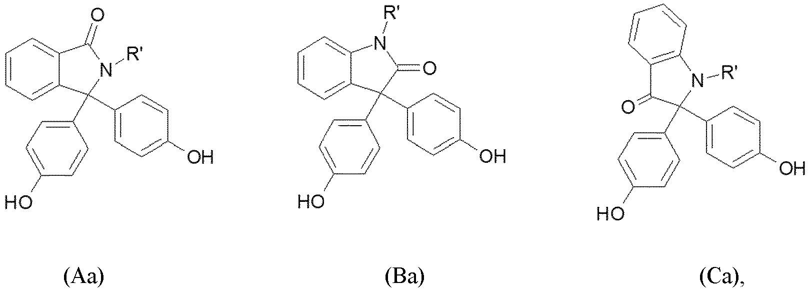 in denen R' jeweils für C₁- bis C₄-Alkyl, Aralkyl oder Aryl, bevorzugt für Methyl oder Phenyl, ganz besonders bevorzugt für Methyl, steht.

Besonders bevorzugte Bisphenole sind 2,2-Bis(4-hydroxyphenyl)propan (Bisphenol A), 2,2-Bis(3,5-dimethyl-4-hydroxyphenyl)propan, 1,1-Bis(4-hydroxyphenyl)cyclohexan, 1,1-Bis(4-hydroxyphenyl)-3,3,5-trimethylcyclohexan, 4,4'-Dihydroxydiphenyl und Dimethyl-Bisphenol A sowie die Bisphenole der Formeln (Aa), (Ba) und (Ca). Ganz besonders bevorzugt ist Bisphenol A.

Diese und weitere geeignete Dihydroxyarylverbindungen sind z. B. in US 2 999 825 A, US 3 148 172 A, US 2 991 273 A, US 3 271 367 A, US 4 982 014 A und US 2 999 846 A, in DE 1 570 703 A, DE 2063 050 A, DE 2 036 052 A, DE 2 211 956 A und DE 3 832 396 A, in FR 1 561 518 A, in der Monographie "H. Schnell, Chemistry and Physics of Polycarbonates, Interscience Publishers, New York 1964" sowie in JP 62039/1986 A, JP 62040/1986 A und JP 105550/1986 A beschrieben.

Im Fall der Homopolycarbonate wird nur eine Dihydroxyarylverbindung eingesetzt, im Fall der Copolycarbonate werden mehrere Dihydroxyarylverbindungen eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind Monophenole. Geeignete Monophenole sind beispielsweise Phenol selbst, Alkylphenole wie Kresole, p-tert-Butylphenol, Cumylphenol sowie deren Mischungen. Bevorzugt wird jedoch kein Cyanophenol als Kettenabbrecher eingesetzt.

Insbesondere ist es bevorzugt, dass das lineare Polycarbonat A keine Endgruppen der Formel (1) umfasst:

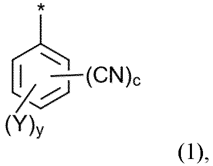

in der Y jeweils unabhängig für ein Halogen, eine Alkylgruppe mit 1 bis 3 Kohlenstoffatomen, eine Alkoxygruppe mit 1 bis 3 Kohlenstoffatomen, eine Arylalkylgruppe mit 7 bis 12 Kohlenstoffatomen, eine Alkylarylgruppe oder eine Nitrogruppe steht, y 0 bis 4 ist und c 1 bis 5 ist, unter der Voraussetzung, dass y+c 1 bis 5 ist, und in der * für die Position steht, mit der die Formel (1) das Polycarbonat (B) terminiert,

Bevorzugt ist es dabei, dass in Formel (1) in Bezug auf Komponente A y 1 bis 2 ist und c 1 bis 2 ist. Besonders bevorzugt ist es dabei, dass in Formel (I) y 0 ist und c 1 bis 2 ist. Ganz besonders bevorzugt ist Formel (1) para-Cyanophenyl oder 3,4-Dicyanophenyl.

Erfindungsgemäß bevorzugt ist es des Weiteren, dass das lineare Polycarbonat A und/oder gegebenenfalls auch das später beschriebene Polycarbonat B Endgruppen der Formel (2a), (2b) und/oder (2c) umfasst: 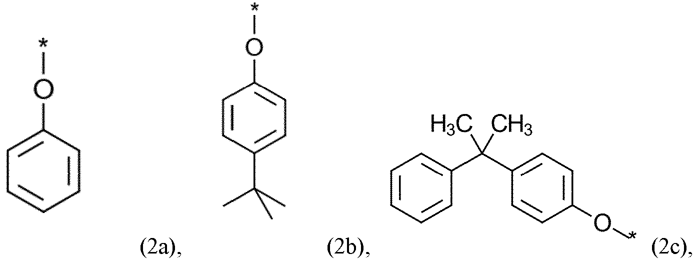 wobei * für die Position steht, mit der die Formeln (2a), (2b) und (2c) das jeweilige Polycarbonat A und/oder B terminieren. Des Weiteren bevorzugt weist das lineare Polycarbonat A Endgruppen der Formel (2a) und/oder (2b) auf, insbesondere bevorzugt der Formel (2b).

Die Menge an einzusetzendem Kettenabbrecher beträgt bevorzugt 0,1 bis 5 Mol-%, bezogen auf Mole an jeweils eingesetzten Dihydroxyarylverbindungen. Die Zugabe der Kettenabbrecher kann vor, während oder nach der Umsetzung mit einem Kohlensäurederivat erfolgen.

Besonders bevorzugte Polycarbonate A sind das Homopolycarbonat auf Basis von Bisphenol A, die Copolycarbonate auf Basis von 1,1-Bis(4-hydroxyphenyl)-3,3,5-trimethylcyclohexan und 4,4'-Dihydroxydiphenyl sowie die Copolycarbonate auf Basis der beiden Monomere Bisphenol A und 1,1-Bis(4-hydroxyphenyl)-3,3,5-trimethylcyclohexan, sowie von den Dihydroxyarylverbindungen der Formeln (Aa), (Ba) und (Ca), abgeleitete Homo- oder Copolycarbonate, insbesondere mit Bisphenol A.

Die Polycarbonate A haben bevorzugt gewichtsmittlere Molekulargewichte M_{w} von 15.000 g/mol bis 40.000 g/mol, weiter bevorzugt bis 34.000 g/mol, besonders bevorzugt von 17.000 g/mol bis 33.000 g/mol, insbesondere von 19.000 g/mol bis 32.000 g/mol, ermittelt durch Gelpermeationschromatographie, kalibriert gegen Bisphenol A-Polycarbonat Standards unter Verwendung von Dichlormethan als Elutionsmittel, Kalibrierung mit linearen Polycarbonaten (aus Bisphenol A und Phosgen) bekannter Molmassenverteilung der PSS Polymer Standards Service GmbH, Deutschland, Kalibrierung nach der Methode 2301-0257502-09D (aus dem Jahre 2009 in deutscher Sprache) der Currenta GmbH & Co. OHG, Leverkusen. Das Elutionsmittel ist Dichlormethan. Säulenkombination aus vernetzten Styrol-Divinylbenzolharzen. Durchmesser der analytischen Säulen: 7,5 mm; Länge: 300 mm. Partikelgrößen des Säulenmaterials: 3 µm bis 20 µm. Konzentration der Lösungen: 0,2 Gew.-%. Flussrate: 1,0 ml/min, Temperatur der Lösungen: 30 °C. Verwendung einer UV- und/oder RI-Detektion.

Die Schmelzevolumenfließrate (MVR), bestimmt gemäß ISO 1133-1:2012-03 bei 300 °C und 1,2 kg Belastung, beträgt 3 bis 40 cm³/10 min, bevorzugt 4 bis 35 cm³/10 min.

Zur Einarbeitung von möglichen Additiven wird die Komponente A bevorzugt in Form von Pulvern, Granulaten oder von Gemischen aus Pulvern und Granulaten eingesetzt. Besonders bevorzugt wird ein Gemisch aus Pulver (Komponente A1) und Granulat eingesetzt. Der Anteil der Komponente A, der nicht als pulverförmige Komponente A1 eingesetzt wird, wird in Form eines Granulats eingesetzt.

### Komponente B

Erfindungsgemäß wird des Weiteren als Komponente B ein Polycarbonat mit einem Verzweigungsgrad von 0,8 bis 1,5 mol-% eingesetzt.

Insbesondere ist es bevorzugt, dass das verzweigte Polycarbonat B keine Endgruppen der Formel (1) umfasst: 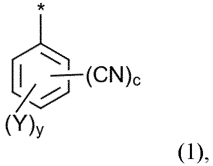 in der Y, y und c wie oben definiert sind. Bevorzugt ist es dabei, dass in Formel (1) in Bezug auf Komponente B y 1 bis 2 ist und c 1 bis 2 ist. Besonders bevorzugt ist es dabei, dass in Formel (1) y 0 ist und c 1 bis 2 ist. Ganz besonders bevorzugt ist Formel (1) para-Cyanophenyl oder 3,4-Dicyanophenyl.

Erfindungsgemäß bevorzugt ist es des Weiteren, dass das Polycarbonat B und gegebenenfalls auch das lineare Polycarbonat A Endgruppen der Formel (2a), (2b) und/oder (2c) umfasst: 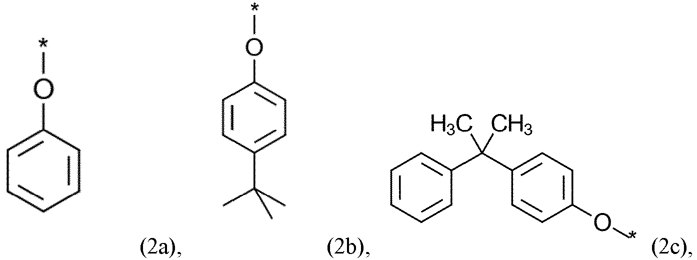 wobei * für die Position steht, mit der die Formeln (2a), (2b) und (2c) das jeweilige Polycarbonat A und/oder B terminieren. Des Weiteren bevorzugt weist das verzweigte Polycarbonat B Endgruppen der Formel (2a) und/oder (2b) auf, insbesondere bevorzugt der Formel (2b).

Erfindungsgemäß wird bei Komponente B oder Polycarbonat B auch von verzweigtem Polycarbonat gesprochen. Dieses hat einen Verzweigungsgrad von 0,8 bis 1,5 mol-%, bevorzugt 0,9 bis 1,3 mol-%, ganz besonders bevorzugt von 1,00 bis 1,25 mol-%, besonders bevorzugt von 1,1 bis 1,2 mol-%.

Gemäß der vorliegenden Erfindung ist der Begriff "verzweigt" so zu verstehen, dass das Polycarbonat mehrere Verzweigungspunkte bzw. einen Verzweigungsgrad aufweist. Dieser Verzweigungsgrad wird in mol.-% angegeben und gemäß der folgenden Formel berechnet:$mol . - % \left(Verzweigungsgrad\right) = mol \left(Verzweiger\right) / \left(mol\left(Verzweiger\right)+\left(mol\left(Dihydroxyverbindung\right)\right)⋅100\right)$ mol.-% (Verzweigungsgrad) = mol (Verzweiger) / (mol(Verzweiger) + (mol (Dihydroxyverbindung)) · 100 wobei der "Verzweiger" das Verzweigungsmittel ist, welches mindestens drei funktionelle Gruppen aufweist und die "Dihydroxyverbindung" die zur Herstellung des Polycarbonats eingesetzte Verbindung mit nur zwei funktionellen Gruppen. Beispielsweise wird in den Beispielen als Verzweiger THPE eingesetzt und die Dihydroxyverbindung ist BPA. Dann ergibt sich:$mol - % \left(Verzweigungsgrad\right) = \left(m\left(THPE\right)\left[g\right]/M\left(THPE\right)\left[g/mol\right]\right) / \left(\left(m\left(THPE\left[g\right]/M\left(THPE\left[g/mol\right]\right)+\left(m\left(BPA\right)\left[g\right]/M\left(BPA\right)\left[g/mol\right]\right)\right)⋅100\right)\right)$ wobei M(THPE) = 306 g/mol und M(BPA) = 228 g/mol und m(THPE) und m(BPA) für die Masse der entsprechenden Edukte bei der Herstellung des verzweigten Polycarbonats stehen.

Obwohl die mol-% des Verzweigungsgrads auf Basis der eingesetzten Edukte berechnet wird, bezieht sich der Begriff "Verzweigungsgrad" erfindungsgemäß auf die chemische Struktur des Verzweigers/ Verzweigungsmittels, wie sie nach der Reaktion im Polycarbonat vorhanden ist. Dies ist möglich, da mindestens 95% des eingesetzten Verzweigers bei der Herstellung des verzweigten Polycarbonats eingebaut werden. Dabei ist es bevorzugt, dass das Polycarbonat B Verzweigungen aufweist, welche ausgewählt sind aus der Gruppe, bestehend aus den Formel (IIa) bis (IIf) und beliebigen Mischungen davon: 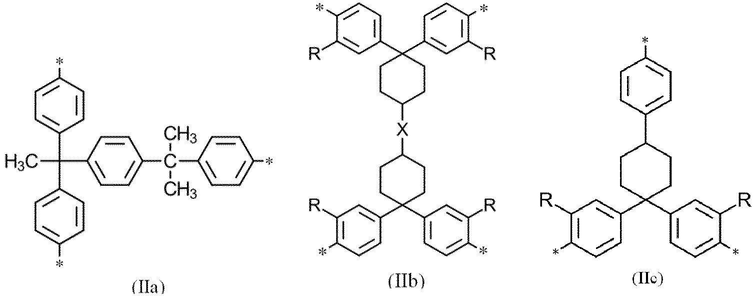 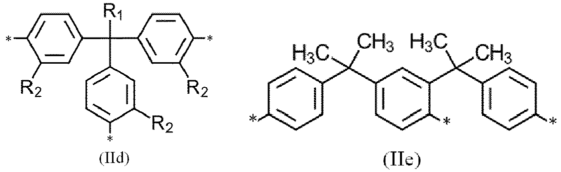 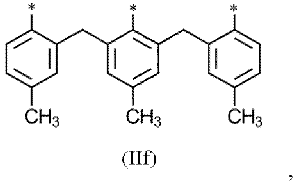 wobei * für die Positionen steht, welche die Verzweigungen mit der Polycarbonatkette verbindet
und
R jeweils unabhängig voneinander für H und einem Alkyl, bevorzugt H und Methyl steht,
X für ein lineares oder verzweigtes Alkyl oder eine Einfachbindung, bevorzugt C(CH₃)₂ oder eine Einfachbindung steht,
R₁ jeweils unabhängig voneinander für H und einem Alkyl, bevorzugt H und Methyl steht und
R₂ jeweils unabhängig voneinander für H und einem Alkyl, bevorzugt H und Methyl steht.

Das verzweigte Polycarbonat B kann eine Art der oben gezeigten Verzweigungen aufweisen oder eine Mischung von zwei oder mehreren Verzweigungen. In einer bevorzugten Ausführungsform weist das Polycarbonat B Verzweigungen der Formel (IId) auf. Dabei ist es insbesondere bevorzugt, dass R₁ und R₂ unabhängig voneinander für H oder Alkyl stehen. Besonders bevorzugt steht R₁ für Methyl und R₂ für H. Eine solche Verzweigungsstruktur resultiert, wenn THPE als Verzweiger eingesetzt wird.

Der Anteil der Verzweigerstrukturen im verzweigten Polycarbonat A kann mit Verfahren, die dem Fachmann bekannt sind, bestimmt werden. Bevorzugt erfolgt dies mittels NMR, insbesondere ¹H- oder ¹³C-NMR. Daneben ist auch eine Totalverseifung des verzweigten Polycarbonats A möglich. Das dabei entstehende Monomergemisch kann mittels HPLC aufgetrennt und die Stoffmengenanteile des Verzweigers und der Dihydroxyverbindung bestimmt werden.

Das Polycarbonat B kann bevorzugt durch die oben zu Polycarbonat A beschriebenen Wege hergestellt werden. Dabei wird das Polycarbonat B jedoch bevorzugt durch das Phasengrenzflächenverfahren hergestellt. Dies ermöglicht es, den Verzweigungsgrad exakt einzustellen.

Für die Herstellung der Polycarbonate B geeignete Dihydroxyarylverbindungen sind beispielsweise Resorcin, Dihydroxydiphenyle, Bis(hydroxyphenyl)alkane, Bis(hydroxyphenyl)cycloalkane, Bis(hydroxyphenyl)sulfide, Bis(hydroxyphenyl)ether, Bis(hydroxyphenyl)ketone, Bis(hydroxyphenyl)-sulfone, Bis(hydroxyphenyl)sulfoxide, α,α'-Bis(hydroxyphenyl)diisopropylbenzole, Phthalimidine, abgeleitet von Isatin- oder Phenolphthaleinderivaten, sowie deren kernalkylierte und kernarylierte Verbindungen.

Bevorzugte Dihydroxyarylverbindungen sind 4,4'-Dihydroxydiphenyl, 2,2-Bis(4-hydroxyphenyl)-propan (Bisphenol A), 2,4-Bis(4-hydroxyphenyl)-2-methylbutan, 1,1-Bis(4-hydroxyphenyl)-p-diisopropylbenzol, 2,2-Bis(3-methyl-4-hydroxyphenyl)propan (Dimethyl-Bisphenol A, Bisphenol C), Bis(3,5-dimethyl-4-hydroxyphenyl)methan, 2,2-Bis(3,5-dimethyl-4-hydroxyphenyl)propan, Bis(3,5-dimethyl-4-hydroxyphenyl)sulfon, 2,4-Bis(3,5-dimethyl-4-hydroxyphenyl)-2-methylbutan, 1,1-Bis-(3,5-dimethyl-4-hydroxyphenyl)-p-diisopropylbenzol, 9,9-Bis(4-hydroxyphenyl)fluoren (Bisphenol FL) und 1,1-Bis(4-hydroxyphenyl)-3,3,5-trimethylcyclohexan, sowie die Bisphenole (Aa) bis (Ca): 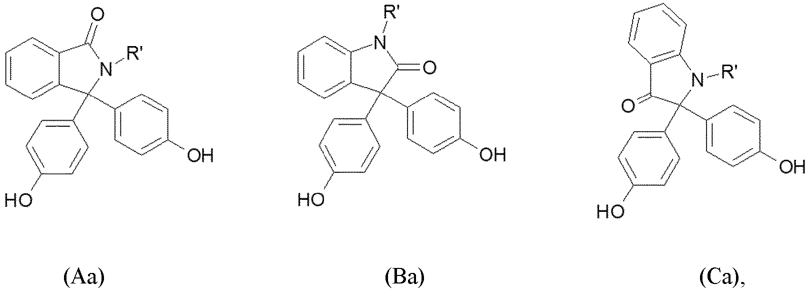 in denen R' jeweils für C₁- bis C₄-Alkyl, Aralkyl oder Aryl, bevorzugt für Methyl oder Phenyl, ganz besonders bevorzugt für Methyl, steht.

Besonders bevorzugte Bisphenole sind 2,2-Bis(4-hydroxyphenyl)propan (Bisphenol A), 2,2-Bis(3,5-dimethyl-4-hydroxyphenyl)propan, 1,1-Bis(4-hydroxyphenyl)cyclohexan, 1,1-Bis(4-hydroxyphenyl)-3,3,5-trimethylcyclohexan, 4,4'-Dihydroxydiphenyl und Dimethyl-Bisphenol A sowie die Bisphenole der Formeln (Aa), (Ba) und (Ca). Ganz besonders bevorzugt ist Bisphenol A.

Wie bereits oben beschrieben, werden Verzweiger/Verzweigungsmittel bei der Synthese des Polycarbonats B eingesetzt, um den entsprechenden Verzweigungsgrad zu erhalten. Geeignete Verzweiger sind dabei die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise 1,3,5-Tri(4-hydroxyphenyl)benzol, 1,1,1-Tri(4-hydroxyphenyl)ethan, Tri(4-hydroxyphenyl)phenylmethan, 2,4-Bis(4-hydroxyphenylisopropyl)phenol, 2,6-Bis(2-hydroxy-5'-methyl-benzyl)-4-methylphenol, 2-(4-Hydroxyphenyl)-2-(2,4-dihydroxyphenyl)-propan, Tetra(4-hydroxyphenyl)methan, Tetra(4-(4-hydroxyphenylisopropyl)phenoxy)methan und 1,4-Bis((4',4"-dihydroxytriphenyl)methyl)benzol und 3,3-Bis(3-methyl-4-hydroxyphenyl)-2-oxo-2,3-dihydroindol.

Insbesondere bevorzugt sind Verzweiger der Formeln (IIIa) bis (IIIf): 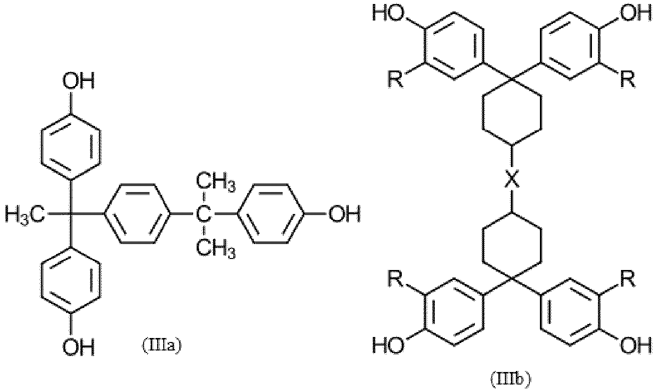 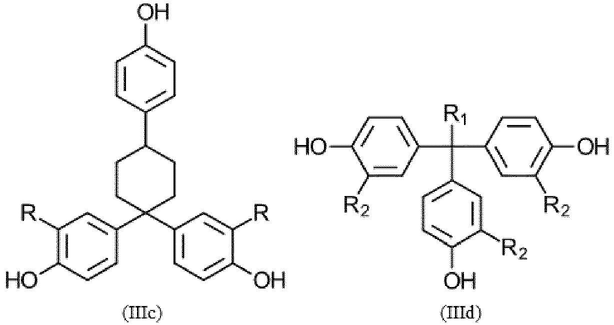 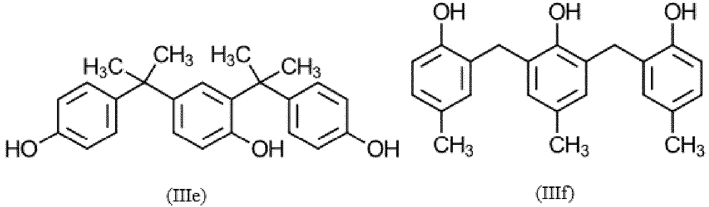 in denen
R jeweils unabhängig voneinander für H und einem Alkyl, bevorzugt H und Methyl steht,
X für ein lineares oder verzweigtes Alkyl oder eine Einfachbindung, bevorzugt C(CH₃)₂ oder eine Einfachbindung steht,
R₁ jeweils unabhängig voneinander für H und einem Alkyl, bevorzugt H und Methyl steht und
R₂ jeweils unabhängig voneinander für H und einem Alkyl, bevorzugt H und Methyl steht.

Insbesondere bevorzugt wird ein Verzweiger der Formel (IId) verwendet. Dabei ist es insbesondere bevorzugt, dass R₁ und R₂ unabhängig voneinander für H oder Alkyl stehen. Besonders bevorzugt steht R₁ für Methyl und R₂ für H.

Die Verzweiger können entweder mit den Dihydroxyarylverbindungen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Dihydroxyarylverbindungen eingesetzt.

Die Polycarbonate B weisen bevorzugt gewichtsmittlere Molekulargewichte M_{w} von 15.000 g/mol bis 40.000 g/mol, weiter bevorzugt 18.000 g/mol bis 34.000 g/mol, besonders bevorzugt von 22.000 g/mol bis 33.000 g/mol, insbesondere von 23.000 g/mol bis 32.000 g/mol auf, ermittelt durch Gelpermeationschromatographie, kalibriert gegen Bisphenol A-Polycarbonat Standards unter Verwendung von Dichlormethan als Elutionsmittel, Kalibrierung mit linearen Polycarbonaten (aus Bisphenol A und Phosgen) bekannter Molmassenverteilung der PSS Polymer Standards Service GmbH, Deutschland, Kalibrierung nach der Methode 2301-0257502-09D (aus dem Jahre 2009 in deutscher Sprache) der Currenta GmbH & Co. OHG, Leverkusen. Das Elutionsmittel ist Dichlormethan. Säulenkombination aus vernetzten Styrol-Divinylbenzolharzen. Durchmesser der analytischen Säulen: 7,5 mm; Länge: 300 mm. Partikelgrößen des Säulenmaterials: 3 µm bis 20 µm. Konzentration der Lösungen: 0,2 Gew.-%. Flussrate: 1,0 ml/min, Temperatur der Lösungen: 30 °C. Verwendung einer UV- und/oder RI-Detektion.

Die Schmelzevolumenfließrate (MVR), bestimmt gemäß ISO 1133-1:2012-03 bei 300 °C und 1,2 kg Belastung, beträgt 3 bis 40 cm³/10 min, bevorzugt 4 bis 35 cm³/10 min.

Erfindungsgemäß umfasst die Zusammensetzung 5 bis 50 Gew.-% der Komponente B, bevorzugt 7 bis 40 Gew.-%, besonders bevorzugt 9 bis 35 Gew.-%, ganz besonders bevorzugt 10 bis 30 Gew.-%. Dabei weiß der Fachmann, dass Komponente B teurer ist als Komponente A. Daher wird er versuchen, das Verhältnis von A zu B so zu optimieren, dass gute Eigenschaften (z. B. ausreichender Flammschutz, gute Verarbeitbarkeit etc.) resultieren, aber für die gewünschten Anwendungen dennoch wirtschaftliche Zusammensetzungen entstehen.

### Komponente C

Ebenso enthalten die erfindungsgemäßen Zusammensetzungen eine Verstärkungsfaser als Komponente C. Diese Verstärkungsfasern können bevorzugt ausgewählt sein aus Glasfasern oder Carbonfasern.

Die Glasfasern basieren üblicherweise auf einer Glaszusammensetzung, ausgewählt aus der Gruppe der M-, E-, A-, S-, R-, AR-, ECR-, D-, Q- oder C-Gläser, wobei E-, S- oder C-Glas bevorzugt sind.

Die Glasfasern können in Form von Schnittglasfasern, sowohl Langfasern als auch Kurzfasern, Mahlfasern, Glasfasergeweben oder Mischungen der vorgenannten Formen eingesetzt werden, wobei die Schnittglasfasern sowie die Mahlfasern bevorzugt eingesetzt werden. Besonders bevorzugt werden Schnittglasfasern eingesetzt.

Die bevorzugte Faserlänge der Schnittglasfasern beträgt vor der Compoundierung 0,5 bis 10 mm, weiter bevorzugt 1,0 bis 8 mm, ganz besonders bevorzugt 1,5 bis 6 mm.

Schnittglasfasern können mit unterschiedlichen Querschnitten eingesetzt werden. Bevorzugt werden runde, elliptische, ovale, 8-förmige und flache Querschnitte eingesetzt, wobei die runden, ovalen sowie flachen Querschnitte besonders bevorzugt sind.

Der Durchmesser eingesetzter Rundfasern vor der Compoundierung beträgt bevorzugt 5 bis 25 µm, weiter bevorzugt 6 bis 20 µm, besonders bevorzugt 7 bis 17 µm, bestimmt mittels lichtmikroskopischer Analyse.

Bevorzugte Flach- und Ovalglasfasern weisen ein Querschnittverhältnis aus Höhe zu Breite von ca. 1,0:1,2 bis 1,0:8,0, bevorzugt 1,0:1,5 bis 1,0:6,0, besonders bevorzugt 1,0:2,0 bis 1,0:4,0 auf.

Bevorzugte Flach- und Ovalglasfasern weisen eine durchschnittliche Faserhöhe von 4 µm bis 17 µm, weiter bevorzugt von 6 µm bis 12 µm und besonders bevorzugt 6 µm bis 8 µm sowie eine durchschnittliche Faserbreite von 12 µm bis 30 µm, weiter bevorzugt 14 µm bis 28 µm und besonders bevorzugt 16 µm bis 26 µm auf. Die Faserabmessungen sind bevorzugt mittels lichtmikroskopischer Analyse bestimmt.

Die Glasfasern sind bevorzugt mit einer Glasschlichte an der Oberfläche der Glasfaser modifiziert. Bevorzugte Glasschlichten umfassen epoxymodifizierte, polyurethanmodifizierte und nicht modifizierte Silanverbindungen sowie Mischungen der vorgenannten Silanverbindungen. Die Glasfasern können auch nicht mit einer Glasschlichte modifiziert sein.

Die verwendeten Glasfasern zeichnen sich dadurch aus, dass die Auswahl der Faser nicht durch die Wechselwirkungscharakteristik der Faser mit der Polycarbonatmatrix beschränkt ist. Sowohl für eine starke Anbindung an die Polymermatrix als auch bei einer nichtanbindenden Faser zeigt sich eine Verbesserung der erfindungsgemäßen Eigenschaften der Zusammensetzungen.

Eine Anbindung der Glasfasern an die Polymermatrix ist an den Tieftemperaturbruchoberflächen bei rasterelektronenmikroskopischen Aufnahmen zu erkennen, wobei die größte Anzahl der gebrochenen Glasfasern auf derselben Höhe wie die Matrix gebrochen sind und nur vereinzelt Glasfasern aus der Matrix herausstehen. Rasterelektronenmikroskopische Aufnahmen zeigen für den umgekehrten Fall der nichtanbindenden Charakteristik, dass die Glasfasern im Tieftemperaturbruch aus der Matrix stark herausstehen oder vollständig herausgeglitten sind.

Erfindungsgemäß können auch Carbonfasern als Verstärkungsfasern eingesetzt werden. Carbonfasern werden industriell üblicherweise aus Vorstufen wie z. B. Polyacrylfasern durch Pyrolyse (Carbonisierung) gewonnen. In den erfindungsgemäßen Zusammensetzungen können Langfasern und Kurzfasern verwendet werden. Bevorzugt werden Kurzfasern eingesetzt. Die Länge der geschnittenen Fasern liegt bevorzugt zwischen 3 mm und 125 mm. Besonders bevorzugt werden Fasern der Länge 3 mm bis 25 mm eingesetzt. Neben Fasern mit rundem Querschnitt sind auch Fasern mit kubischer Dimension (plättchenförmig) einsetzbar.

Neben den geschnittenen Fasern werden alternativ bevorzugt gemahlene Carbonfasern eingesetzt. Bevorzugte gemahlene Carbonfasern weisen Längen von 50 µm bis 150 µm auf.

Die Carbonfasern sind gegebenenfalls mit organischen Schlichten gecoatet, um besondere Anbindungen an die Polymermatrix zu ermöglichen. Die bevorzugten Schlichten entsprechen den für Glasfasern genannten.

Kurzschnittfasern und gemahlene Carbonfasern werden den polymeren Basismaterialien üblicherweise durch Compoundierung zugesetzt. Für Langfäden wird üblicherweise mit Hilfe spezieller technischer Verfahren Kohlenstoff in feinsten Fäden angeordnet. Diese Filamente besitzen üblicherweise einen Durchmesser von 3 bis 10 µm. Aus den Filamenten können auch Rovings, Gewebe, Vliese, Bänder, Schläuche oder Ähnliches hergestellt werden.

Die erfinderische Zusammensetzung kann auch eine Mischung verschiedener Verstärkungsfasern C enthalten, dabei kann es sich um ein Gemisch verschiedener Glasfasern und/oder einem Gemisch aus Glas- und Carbonfasern handeln, bevorzugt wird ein Glasfasergemisch, besonders bevorzugt wird nur eine Glasfaser eingesetzt.

Die Verstärkungsfasern C können von 5 bis 40 Gew.-%, bevorzugt von 6 bis 35 Gew.-%, besonders bevorzugt von 7 bis 30 Gew.-% und ganz besonders bevorzugt von 8 bis 25 Gew.- % in der erfindungsgemäßen Zusammensetzung enthalten sein.

Dem Fachmann ist bekannt, dass die Anwesenheit der Verstärkungsfasern in der erfindungsgemäßen Zusammensetzung die Flammwidrigkeit der Zusammensetzung bei jeweils gegebener Schmelzeviskosität beeinflusst. Der Fachmann sieht sich in der Lage, sollte kein V-0 bei 1,8 mm, bevorzugt 1,5 mm erzielt werden, insbesondere durch die vorliegende Erfindung die Menge an Komponente B in der Zusammensetzung zu erhöhen, so dass eine entsprechende Flammwidrigkeit bei gleichbleibender Schmelzeviskosität von V-0 bei 1,8 mm, bevorzugt 1,5 mm erhalten wird. Gleichzeitig ist es bevorzugt, dass Zusammensetzungen mit einer Verstärkungsfaser C eine Flammwidrigkeit von mindestens 5VA bei 3,0 mm aufweisen.

### Komponente D

Die erfindungsgemäße Zusammensetzung umfasst des Weiteren als Komponente D eine Verbindung, ausgewählt aus der Gruppe von Alkali-, Erdalkali- oder Ammoniumsalzen aliphatischer oder aromatischer Sulfonsäure-, Sulfonamid-, oder Sulfonimidderivate und Kombinationen aus diesen.

Es versteht sich, dass es sich auch um eine Kombination aus zwei oder mehr solcher Flammschutzmittel handeln kann. Ebenso versteht sich, dass es sich dabei auch um zwei oder mehrere Vertreter einer der genannten Verbindungsgruppen handeln kann.

Unter "Derivaten" werden erfindungsgemäß an dieser und anderer Stelle solche Verbindungen verstanden, deren Molekülstruktur an der Stelle eines H-Atoms oder einer funktionellen Gruppe ein anderes Atom oder eine andere Atomgruppe besitzt bzw. bei denen ein oder mehrere Atome/ Atomgruppen entfernt wurden. Die Stammverbindung ist somit noch weiterhin erkennbar.

Besonders bevorzugt umfassen erfindungsgemäße Zusammensetzungen als Flammschutzmittel ein oder mehrere Verbindungen, ausgewählt aus der Gruppe, bestehend Natrium- oder Kaliumdiphenylsulfonsulfonat, Dinatrium- oder Dikalium-3,3'-sulfonylbis(benzolsulfonat), Natrium- oder Kalium-2-formylbenzolsulfonat, Natrium- oder Kalium(N-benzolsulfonyl)benzolsulfonamid oder deren Mischungen.

Bevorzugt werden Natrium- oder Kaliumdiphenylsulfonsulfonat, Dinatrium- oder Dikalium-3,3'-sulfonylbis(benzolsulfonat) oder deren Mischungen eingesetzt. Des Weiteren bevorzugt ist ein Gemisch aus Kaliumdiphenylsulfonsulfonat und Dikalium-3,3'-sulfonylbis(benzolsulfonat). Ganz besonders bevorzugt ist ein Gemisch, das Kaliumdiphenylsulfonsulfonat (D1) und Dikalium-3,3'-sulfonyl-bis(benzolsulfonat) (D2) in einem Verhältnis D1:D2 von 80:20 bis 50:50, bevorzugt im Verhältnis von 75:25 bis 66:34 enthält.

Die erfindungsgemäßen Zusammensetzungen enthalten dabei 0,10 bis 0,25 Gew.-%, bevorzugt 0,12 bis 0,22 Gew.-%, des Weiteren bevorzugt 0,14 bis 0,20 Gew.-%, besonders bevorzugt 0,16 bis 0,18 Gew.-% der Komponente D.

### Komponente E

Optional enthält die Zusammensetzung zusätzlich als Komponente E ein cyclisches Siloxan der Formel (R¹₂SiO)_{y} und /oder ein Siloxan, welches eine trifunktionelle Siloxaneinheit der Formel R²SiO_{3/2} umfasst, worin R¹ jeweils unabhängig für eine monovalente aliphatische oder aromatische Kohlenwasserstoffgruppe oder eine fluorierte Kohlenwasserstoffgruppe mit jeweils 1 bis 18 Kohlenstoffatomen steht und y eine Zahl von 3 bis 12 ist beziehungsweise worin R² jeweils unabhängig für Wasserstoff, eine monovalente aliphatische oder aromatische Kohlenwasserstoffgruppe mit jeweils 1 bis 18 Kohlenstoffatomen oder eine monovalente Alkoxygruppe mit 1 bis 18 Kohlenstoffatomen steht.

Besonders bevorzugt handelt es sich bei dem cyclischen Siloxan der Formel (R¹₂SiO)_{y} um Octamethylcyclotetrasiloxan, 1,2,3,4-Tetramethyl-1,2,3,4-tetravinylcyclotetrasiloxan, 1,2,3,4-Tetramethyl-1,2,3,4-tetraphenylcyclotetrasiloxan, Octaethylcyclotetrasiloxan, Octapropylcyclotetrasiloxan, Octabutylcyclotetrasiloxan, Decamethylcyclopentasiloxan, Dodecamethylcyclohexasiloxan, Tetradecamethylcycloheptasiloxan, Hexadecamethylcyclooctasiloxan, Eicosamethylcyclodecasiloxan, Octaphenylcyclotetrasiloxan. Besonders bevorzugt ist dabei Octaphenylcyclotetrasiloxan.

Handelt es sich bei E um ein Siloxan, welches eine trifunktionelle Siloxaneinheit der Formel R²SiO_{3/2} umfasst, ist es bevorzugt, dass dieses Siloxan diese Formel zu mindestens 90 mol.-%, besonders bevorzugt zu mindestens 95 mol.-% und ganz besonders bevorzugt zu 100 mol.-% umfasst, bezogen auf die Gesamtheit der Mole an Siloxaneinheiten (M-Einheit, D-Einheit, T-Einheit, Q-Einheit). Dabei stellt die Formel R²SiO_{3/2} eine T-Einheit dar. Wie dem Fachmann bekannt, stellt eine M-Einheit die Formel R₃SiO_{1/2} dar (worin R Wasserstoff oder eine monovalente organische Gruppe darstellt), D stellt eine bifunktionelle Einheit der Formel R₂SiO dar (worin R Wasserstoff oder eine monovalente organische Gruppe darstellt) und eine Q-Einheit stellt eine tetrafunktionelle Siloxaneinheit der Formel SiO₂ dar.

Diese trifunktionelle Siloxaneinheit der Formel R²SiO_{3/2} ist auch als Polysilsequioxan bekannt. Sie kann neben den T-Einheiten auch M-Einheiten aufweisen. Die Strukturen sind dabei dem Fachmann bekannt. Sie können verbrückende Strukturen oder Käfigstrukturen aufweisen.

Bevorzugt ist R² dabei ausgewählt aus Wasserstoff, C₁-C₁₂-Alkyl, C₁-C₁₂-Alkenyl, C₁-C₁₂-Alkoxy, C₁-C₁₂-Acyl, C₃-C₈-Cycloalkyl oder Phenyl. Besonders bevorzugt wird R² ausgewählt aus C₁-C₆-Alkyl, C₁-C₆-Alkenyl, C₁-C₆-Alkoxy und Phenyl. Des Weiteren bevorzugt wird R² ausgewählt aus Methyl, Ethyl, Propyl, Butyl und Hexyl. Besonders bevorzugt stellt R² Methyl dar. Besonders bevorzugt sind Polymethylsilsesquioxan und Octamethylsilsesquioxan.

Es ist bevorzugt, dass Komponente E, falls vorhanden, in der erfindungsgemäßen Zusammensetzung in Mengen von 0,1 bis 5 Gew.-%, bevorzugt 0,5 bis 4 Gew.-%, besonders bevorzugt 1,0 bis 3 Gew.-%, ganz besonders bevorzugt 1,5 bis 2,5 Gew.-% eingesetzt wird. Ganz besonders bevorzugt beträgt der Anteil der Komponente E mehr als 0,1 Gew.-% an der gesamten Zusammensetzung, wenn bis zu 4 Gew-% der pulverförmigen Komponente A1 enthalten sind. Ebenso ganz besonders bevorzugt beträgt der Gehalt der Komponente E mehr als 1 Gew.-% an der gesamten Zusammensetzung, wenn der Gehalt der pulverförmige Komponente A1 größer als 4 Gew.-% ist.

### Komponente F

Ebenso ist es erfindungsgemäß besonders bevorzugt, dass die Zusammensetzung zusätzlich als Komponente F mindestens ein weiteres Additiv ausgewählt aus der Gruppe, bestehend aus Thermostabilisatoren, Entformungsmitteln, UV-Absorbern, Verträglichkeitsvermittlern, Antioxidantien, IR-Absorbern, Fließverbesserern, Umesterungsstabilisatoren, Additive für die Lasermarkierung und Schlagzähmodifikatoren umfasst.

Solche Additive, wie sie üblicherweise bei Polycarbonaten zugesetzt werden, sind beispielsweise in EP-A 0 839 623, WO-A 96/15102, EP-A 0 500 496 oder "Plastics Additives Handbook", Hans Zweifel, 5th Edition 2000, Hanser Verlag, München beschrieben. Diese Additive können einzeln oder auch im Gemisch zugesetzt werden. Es versteht sich, dass nur solche Additive und nur in solchen Mengen zugesetzt werden dürfen, wenn sie sich nicht signifikant negativ auf den erfindungsgemäßen Effekt der guten Flammwidrigkeit auswirken.

Als Thermostabilisatoren eignen sich bevorzugt Triphenylphosphin, Tris(2,4-di-tert-butylphenyl)-phosphit (Irgafos 168), Tetrakis(2,4-di-tert-butylphenyl)-[1,1-biphenyl]-4,4'-diylbisphosphonit, Octadecyl-3-(3,5-di-tert-butyl-4-hydroxyphenyl)propionat (Irganox 1076), Bis(2,4-dicumylphenyl)-pentaerythritoldiphosphit (Doverphos S-9228 PC), Bis(2,6-di-tert-butyl-4-methylphenyl)pentaerythritoldiphosphit (ADK STAB PEP-36). Sie werden allein oder im Gemisch (z. B. Irganox B900

[Gemisch aus Irgafos 168 und Irganox 1076 im Verhältnis 4:1] oder Doverphos S-9228 PC mit Irganox B900 bzw. Irganox 1076) eingesetzt.

Als Entformungsmittel kommen insbesondere Pentaerythritoltetrastearat (PETS) bzw. Glycerinmonostearat (GMS) in Frage.

Die UV-Absorber weisen eine möglichst geringe Transmission unterhalb 400 nm und eine möglichst hohe Transmission oberhalb von 400 nm auf. Für den Einsatz in der erfindungsgemäßen Zusammensetzung besonders geeignete UV-Absorber sind Benzotriazole, Triazine, Benzophenone und/oder arylierte Cyanoacrylate.

Besonders geeignete UV-Absorber sind Hydroxy-Benzotriazole, wie 2-(3',5'-Bis(1,1-dimethylbenzyl)-2'-hydroxyphenyl)benzotriazol (Tinuvin 234, BASF SE, Ludwigshafen), 2-(2'-Hydroxy-5'-(tert.-octyl)-phenyl)benzotriazol (Tinuvin 329, BASF SE, Ludwigshafen), Bis(3-(2H-benztriazolyl)-2-hydroxy-5-tert.-octyl)methan (Tinuvin 360, BASF SE, Ludwigshafen), 2-(4,6-Diphenyl-1,3,5-triazin-2-yl)-5-(hexyloxy)phenol (Tinuvin 1577, BASF SE, Ludwigshafen), sowie Benzophenone wie 2,4-Dihydroxybenzophenon (Chimasorb 22, BASF SE, Ludwigshafen) und 2-Hydroxy-4-(octyl-oxy)benzophenon (Chimassorb 81, BASF SE, Ludwigshafen), 2,2-Bis[[(2-cyano-1-oxo-3,3-diphenyl-2-propenyl)oxy]methyl]-1,3-propandiylester (9CI) (Uvinul 3030, BASF SE, Ludwigshafen), 2-[2-Hydroxy-4-(2-ethylhexyl)oxy]phenyl-4,6-di(4-phenyl)phenyl-1,3,5-triazine (Tinuvin 1600, BASF SE, Ludwigshafen), Tetraethyl-2,2'-(1,4-phenylendimethyliden)bismalonat (Hostavin B-Cap, Clariant AG) oder N-(2-Ethoxyphenyl)-N'-(2-ethylphenyl)ethandiamid (Tinuvin 312, CAS-Nr. 23949-66-8, BASF SE, Ludwigshafen).

Besonders bevorzugte spezielle UV-Absorber sind Tinuvin 360, Tinuvin 329, Tinuvin 312, Tinuvin 326 und/oder Tinuvin 1600, ganz besonders bevorzugt sind Tinuvin 329, Tinuvin 326 und/oder Tinuvin 360.

Es können auch Mischungen der genannten UV-Absorber eingesetzt werden.

Sofern UV-Absorber enthalten sind, enthält die Zusammensetzung bevorzugt UV-Absorber in einer Menge bis 0,8 Gew.-%, bevorzugt 0,05 Gew.-% bis 0,5 Gew.-%, ganz besonders bevorzugt 0,08 Gew.-% bis 0,15 Gew.-%.

Besonders bevorzugt wird bei UV-geschützten Zusammensetzungen Tris(isooctyl)phosphat in Mengen von 0,005 Gew-% bis 0,020 Gew.-% als Verarbeitungshilfsstoff gegen Umesterungsreaktionen (Nebenreaktionen) bei der Compoundierung/Verarbeitung eingesetzt.

Gängige Schlagzähmodifikatoren, wie z. B. Polyethylenwachse oder Kern-Schale-Modifikatoren wie z. B. Silikon-Acrylat-Kautschuke, sind dem Fachmann bekannt.

### Komponente G

Für gefärbte Zusammensetzungen sind als weitere Komponente G bevorzugt Farbmittel enthalten. Die Farbmittel sind dem Fachmann bekannt. Sie umfassen bevorzugt sowohl Ruß, Pigmente, insbesondere Titandioxid, und/oder organische Farbmittel. Wenn Titandioxid in der Zusammensetzung enthalten ist, ist es bevorzugt bis zu 5 Gew.-%, ganz besonders bevorzugt bis zu 3 Gew.-%, ebenso bevorzugt bis zu 2 Gew.-% bezogen auf die Gesamtzusammensetzung enthalten. Der Fachmann weiß, dass Titandioxid Einfluss auf die Flammwidrigkeit der Zusammensetzung haben kann. Daher sind Farben, welche dadurch erhalten werden, dass sie unter anderem Titandioxid enthalten, für eine Erzielung von mindestens V-0 bei 1,8 mm, bevorzugt 1,5 mm besonders herausfordernd.

Überraschenderweise zeigte sich jedoch, dass der Anteil der Komponente G an der gesamten Zusammensetzung mehr als 0 Gew.-% betragen muss, wenn der Gehalt der pulverförmige Komponente A1 größer als 4 Gew.-% ist, um eine Flammwidrigkeit nach UL94 von V-0 bei einer Dicke von 1,8 mm zu erreichen.

Umfasst die erfindungsgemäße Zusammensetzung die Komponente(n) E, F und/oder G, so beziehen sich die angegebenen Mengen jeweils auf die Summe der vorhandenen Komponenten A bis E, F und/oder G.

Bevorzugt umfasst die erfindungsgemäße Zusammensetzung die Komponenten A bis G in den folgenden Mengen:
40 bis 79,5 Gew.-%, besonders bevorzugt 45 bis 75 Gew.-%, ganz besonders bevorzugt 50 bis 70 Gew.-%, äußerst bevorzugt 55 bis 65 Gew.-% der Komponente A;
5 bis 50 Gew.-%, besonders bevorzugt 7 bis 40 Gew.-%, ganz besonders bevorzugt 9 bis 35 Gew.-%, äußerst bevorzugt 10 bis 30 Gew-% der Komponente B;
5 bis 40 Gew.-%, besonders bevorzugt 6 bis 35 Gew.-%, ganz besonders bevorzugt von 7 bis 30 Gew.-% und äußerst bevorzugt von 8 bis 25 Gew.-% der Komponente C;
0,10 bis 0,25 Gew.-%, besonders bevorzugt 0,12 bis 0,22 Gew.-%, ganz besonders bevorzugt 0,14 bis 0,20 Gew.-%, äußerst besonders bevorzugt 0,16 bis 0,18 Gew.-% der Komponente D;
optional die Komponente E, besonders bevorzugt 0,1 bis 5 Gew.-% E, weiterhin besonders bevorzugt 0,5 bis 4 Gew.-%, ganz besonders bevorzugt 1,0 bis 3 Gew.-%, äußerst bevorzugt 1,5 bis 2,5 Gew.-% der Komponente E;
optional die Komponente F, besonders bevorzugt 0,01 bis 2 Gew.-%, ganz besonders bevorzug 0,1 bis 1 Gew.-%, äußerst bevorzugt 0,2 bis 0,8 Gew.-%, ganz äußerst bevorzugt 0,3 bis 0,6 Gew.-% der Komponente F;
optional die Komponente G, besonders bevorzugt 0,001 bis 5 Gew.-%, ganz besonders bevorzugt 0,01 bis 4 Gew.-%, äußerst bevorzugt 0,1 bis 3 Gew.-% der Komponente G;
wobei sich die Gew.-% auf die Summe der Komponenten A bis G beziehen.

Dabei ist es besonders bevorzugt, dass die erfindungsgemäße Zusammensetzung aus den Komponenten A bis G besteht. Dann ergänzen sich die Gewichtsanteile der Komponenten A bis G zu 100 %.

### Beispiele

Die in den folgenden Beispielen beschriebenen Polycarbonat-basierten Zusammensetzungen wurden auf einem Extruder ZE 25 der Fa. Berstorff mit einem Durchsatz von 10 kg/h durch Compoundierung hergestellt. Die Schmelzetemperatur betrug 290-340 °C.

### Materialien

- A: lineares Polycarbonat auf Basis von Bisphenol A und p-tert.-Butylphenol als Kettenabbrecher mit einer Schmelze-Volumenfließrate MVR (300 °C/1,2 kg) von 9 cm³/10 min (gemäß ISO 1133:2012-03, bei einer Prüftemperatur 300 °C und 1,2 kg Belastung), eingesetzt als Granulat
- A1: pulverförmiges, lineares Polycarbonat auf Basis von Bisphenol A und p-tert.-Butylphenol als Kettenabbrecher mit einer Schmelze-Volumenfließrate MVR (300 °C/1,2 kg) von 6 cm³/10 min (gemäß ISO 1133:2012-03, bei einer Prüftemperatur 300 °C und 1,2 kg Belastung)
- B: verzweigtes Polycarbonat auf Basis von Bisphenol A und 1,1,1-Tri(4-hydroxyphenyl)ethan (THPE) als Verzweiger (Verzweigungsgrad: 1 mol-%) und p-tert.-Butylphenol (BUP) als Kettenabbrecher mit einer Schmelzevolumenfließrate MVR von 6 cm³/10 min (gemäß ISO 1133:2012-03, bei einer Prüftemperatur 300 °C und 1,2 kg Belastung), maximale Schmelzeviskosität 140 Pa s (350-450 °C, 10 °C/min, 3 rad/s)
- C-1: nicht-anbindende Glasfaser CS108F-14P, 3B-Fibreglass sprl Belgium
- C-2: anbindende Glasfaser CS7968 4,5mm, Lanxess AG, Deutschland
- C-3: nicht-anbindende Glasfaser CS 415A-14C 4mm, Owens-Corning, USA
- D-1: DPS-Salz (KSS-Salz), Gemisch aus Kaliumdiphenylsulfonsulfonat und Dikalium-3,3'-sulfonylbis(benzolsulfonat) im Verhältnis von 75:25, Arichem LLC USA
- D-2: Kaliumperfluorbutansulfonat, Bayowet C4, Lanxess AG, Deutschland
- E: Octaphenylcyclotetrasiloxan (OPCTS), Shin-Etsu Co, Ltd. Japan
- F-1: Tris(isooctyl)phosphat, DISFLAMOLL TOF, Lanxess Deutschland
- F-2: Octadecyl-3-(3,5-di-tert-butyl-4-hydroxyphenyl)propionat, IRGANOX 1076, BASF SE, Deutschland
- F-3: Bis(3-(2H-benztriazolyl)-2-hydroxy-5-tert.-octyl)methan, Tinuvin 360, BASF SE, Deutschland
- F-4: Pentaerythritoltetrastearat (PETS), Loxiol P 861/3.5 Special, Emery Oleochemicals GmbH
- F-5: 2-(2H-Benzotriazol-2-yl)-4-(1,1,3,3-tetramethylbutyl)phenol, Tinuvin 329, BASF SE, Deutschland
- F-6: neutraler Wachsester Loxiol G32, Emery Oleochemicals GmbH, Deutschland
- G-1: Farbmittelmischung bestehend aus 0,7 Gew-% Heucodur Yellow 3R (Chromaflo Technologies Co., USA), 0,1 Gew-% Colortherm Red 130 (Errebi Chimica SRL, Italien), 0,4 Gew-% Lamp Black 101 (Orion Engineered Carbons Co., Ltd., Korea) und 98,8 Gew-% Titandioxid Kronos 2230 (Kronos Titan GmbH, Deutschland)
- G-2: Ruß, Carbon Black Pearls 800, The East Asiatic (Thailand) Pub. Co. Ltd.
- G-3: Farbmittelmischung bestehend aus 6,62 Gew.-% Macrolex Yellow 6G (Poliplast S.P.A., Italien), 11,39 Gew.-% Oracet Magenta 460 (Shanghai Twinstar Trading Company, Ltd., P. R. China), 34,29 Gew.-% Macrolex Red EG (Lanxess India Private Ltd.), 0,05 Gew.-% Macrolex Green 5B (Shanghai J&T Chemical Company, P. R. China) und 47,65 Gew.-% Titandioxid Kronos 2230 (Kronos Titan GmbH, Deutschland)

**Tabelle 1: Prüfmethoden**

| **Eigenschaft** | **Prüfbedingung** | **Einheit** | **Norm** |
|---|---|---|---|
| Flammschutz UL94-V | 1,8 mm / 1,5 mm | | UL94 |
| Flammschutz UL94-5V | 3,0 mm | | UL94 |
| GWFI | 3,0 mm / 1,5 mm | °C | DIN EN IEC 60695-2-12 |
| GWIT | 3,0 mm / 1,5 mm | °C | DIN EN IEC 60695-2-13 |
| MVR | 300 °C; 1,20 kg; 5 min | | ISO 1133-1 |
| Schmelzeviskosität | 300 °C | Pa s | ISO 11443 |
| HDT | 1,8 MPa (A) / 0,45 MPa (B) | °C | ISO 75-2:2013 |
| Vicat | B50; 50 K/h; 50 N | °C | DIN EN ISO 306:2023 |

Für die Klassifizierung nach UL94V werden Probekörper der Zusammensetzungen mit den Abmessungen 125 × 13 × *S* (mm)³ mittels Spritzguss bei 280 °C/300 °C Schmelzetemperatur hergestellt. Dabei stellt S die Dicke der Probekörper dar, wie sie in den Tabellen 1, 4 und 5 angegeben ist.

Die UL94-Tests werden mit offener Flamme (Bunsenbrenner) durchgeführt. Sie wirkt bei der UL94V-Prüfung zweimal 10 s auf den Probekörper ein und wird anschließend wieder entfernt. Dabei werden die Brennzeit und auch das Abfallen brennender Teile mit Hilfe eines Wattebausches, welcher sich unter dem Probekörper befindet, bewertet.
- V-2: Verlöschen einer vertikal eingespannten Probe innerhalb von 30 Sekunden. Brennendes Abtropfen von Kunststoffschmelze zulässig.
- V-1: wie V-2, jedoch kein brennendes Abtropfen von Kunststoffschmelze zulässig. Maximal 60 Sekunden Nachglimmen.
- V-0: wie V-1, jedoch Verlöschen der Flamme innerhalb von 10 Sekunden. Maximal 30 Sekunden Nachglimmen.

Das Brandverhalten nach UL94-5V wird an Stäben der Abmessung 127 x 12,7 x 3,0 mm sowie Platten der Abmessung 150 x 105 x 3,0 mm ermittelt.

### Vorbehandlung:

2 Tage, 23 °C, 50 % rel. Feuchte
7 Tage, 70 °C, Umluftofen

Die Glühdrahtentzündungstemperatur (GWIT) wird nach DIN EN IEC 60695-2-13 (VDE 0471-2-13):2022-11 und die Glühdrahtbrennbarkeitstemperatur (GWFI) nach DIN EN IEC 60695-2-12 (VDE 0471-2-12):2022-11 bestimmt. Für beide Prüfverfahren werden Prüfkörper in Form von Rundplatten mit einem Durchmesser von 80 mm und der angegebenen Dicke eingesetzt.

Die Bestimmung des Schmelze-Volumenfließrate (MVR) erfolgte nach ISO 1133-1: 2012-03 (bei einer Prüftemperatur von 300 °C für 5 Minuten, Masse 1,2 kg) mit dem Gerät Göttfert MI-ROBO 8998 der Firma Göttfert oder dem Gerät Zwick 4106 der Firma Zwick Roell.

Die Bestimmung der Scherviskosität (Schmelzeviskosität) erfolgte in Anlehnung an ISO 11443: 2014-04 mit dem Gerät Visco-Robo 45.00 der Fa. Göttfert.

Die Heat Deflection Temperature (HDT) als Maß für die Wärmeformbeständigkeit wurde gemäß DIN EN ISO 75-1:2013-08 an Prüfkörpern der Abmessung 80 mm x 10 mm x 4 mm mit einer Last von 1,8 MPa (HDT A) bzw 0,45 MPa (HDT B) mit dem Gerät HDT Vollautomat der Firma Coesfeld gemessen.

Die Vicat-Erweichungstemperatur VST/B50 als Maß für die Wärmeformbeständigkeit wurde gemäß ISO 306:2014-3 an Prüfkörpern der Abmessung 80 mm x 10 mm x 4 mm mit einer Stempellast von 50 N und einer Aufheizgeschwindigkeit von 50 °C/h mit dem Gerät Coesfeld Eco 2920 der Firma Coesfeld Materialtest bestimmt.

**Tabelle 2: Zusammensetzungen, Anteile der Komponenten A-G in Gew.-%**

| | Bsp. 1 | Bsp. 2 | Bsp. 3 | Bsp. 4 | Vgl.-Bsp. 1 | Bsp. 5 | Bsp. 6 | Vgl.-Bsp. 2 | Bsp. 7 | Vgl.-Bsp. 3 |
|---|---|---|---|---|---|---|---|---|---|---|
| A | 55,000 | 61,845 | 63,455 | 63,455 | 58,000 | 55,000 | 62,455 | 58,000 | 55,000 | 70,000 |
| A1 | 7,870 | | | | 5,455 | 6,870 | | 4,455 | 5,870 | 9,390 |
| B | 15,000 | 15,000 | 15,000 | 15,000 | 15,000 | 15,000 | 15,000 | 15,000 | 15,000 | |
| C-2 | 20,000 | 20,000 | 20,000 | 20,000 | 20,000 | 20,000 | 20,000 | 20,000 | 20,000 | |
| C-3 | | | | | | | | | | 20,000 |
| D-1 | 0,170 | 0,170 | 0,170 | 0,170 | 0,170 | 0,170 | 0,170 | 0,170 | 0,170 | |
| D-2 | | | | | | | | | | 0,160 |
| E | | 1,000 | 1,000 | 1,000 | 1,000 | 1,000 | 2,000 | 2,000 | 2,000 | |
| F-2 | | 0,025 | 0,025 | 0,025 | 0,025 | | 0,025 | 0,025 | | |
| F-4 | 0,350 | 0,350 | 0,350 | 0,350 | 0,350 | 0,350 | 0,350 | 0,350 | 0,350 | |
| F-6 | | | | | | | | | | 0,450 |
| G-1 | 1,610 | 1,610 | | | | 1,610 | | | 1,610 | |
| G-2 | | | 0,200 | | | | | | | |
| G-3 | | | | 0,840 | | | | | | |

**Tabelle 3: Zusammensetzungen, Anteile der Komponenten A-G in Gew.-%**

| | Bsp. 8 | Bsp. 9 | Bsp. 10 | Bsp. 11 | Vgl.-Bsp. 4 | Vgl.-Bsp. 5 |
|---|---|---|---|---|---|---|
| A | 55,000 | 55,000 | 55,000 | 62,325 | 79,350 | 77,490 |
| A1 | 7,870 | 6,870 | 5,870 | | 10,000 | 10,000 |
| B | 25,000 | 25,000 | 25,000 | 25,000 | | |
| C-1 | 10,000 | 10,000 | 10,000 | 10,000 | | |
| C-3 | | | | | 10,000 | 10,000 |
| D-1 | 0,170 | 0,170 | 0,170 | 0,170 | | |
| D-2 | | | | | 0,200 | 0,200 |
| E | | 1,000 | 2,000 | 2,000 | | |
| F-1 | | | | 0,010 | | |
| F-2 | | | | 0,025 | | |
| F-3 | | | | 0,120 | | |
| F-4 | 0,350 | 0,350 | 0,350 | 0,350 | 0,450 | 0,450 |
| F-5 | | | | | | 0,250 |
| G-1 | 1,610 | 1,610 | 1,610 | | | 1,610 |

**Tabelle 4: Eigenschaften der Zusammensetzungen aus Tabelle 2**

| | | Bsp. 1 | Bsp. 2 | Bsp. 3 | Bsp. 4 | Vgl.-Bsp. 1 | Bsp. 5 | Bsp. 6 | Vgl.-Bsp. 2 | Bsp. 7 | Vgl.-Bsp. 3 |
|---|---|---|---|---|---|---|---|---|---|---|---|
| UL94-V | 1,8 mm | V-0 | V-0 | V-0 | V-0 | V-1 | V-0 | V-0 | V-1 | V-0 | V-0 |
| | 1,5 mm | V-1 | V-0 | V-0 | V-0 | V-1 | V-1 | V-0 | V-1 | V-0 | V-0 |
| UL94-5V | 3,0 mm | 5VA | * | * | * | * | 5VA | 5VA | * | 5VA | 5VA |
| GWFI [°C] | 3,0 mm | * | * | * | * | * | * | 960 | * | * | 960 |
| | 1,5 mm | * | * | * | * | * | * | 960 | * | * | 960 |
| GWIT [°C] | 3,0 mm | * | * | * | * | * | * | 875 | * | * | 875 |
| | 1,5 mm | * | * | * | * | * | * | 875 | * | * | 875 |
| MVR | 300 °C; 1,20 kg; 5 min | 4,6 | * | * | * | 3,5 | 5,0 | 4,8 | 3,7 | 5,3 | 5,0 |
| Schmelzeviskosität [Pa s] | 50 s⁻¹, 300 °C | 934 | * | * | * | * | 877 | 848 | * | 745 | 936 |
| | 100 s⁻¹, 300 °C | 802 | * | * | * | * | 750 | 706 | * | 686 | 770 |
| | 200 s⁻¹, 300 °C | 685 | * | * | * | * | 632 | 584 | * | 581 | 643 |
| | 500 s⁻¹, 300 °C | 512 | * | * | * | * | 467 | 440 | * | 436 | 488 |
| | 1000 s⁻¹, 300 °C | 389 | * | * | * | * | 355 | 336 | * | 326 | 368 |
| | 1500 s⁻¹, 300 °C | 319 | * | * | * | * | 295 | 277 | * | 271 | 309 |
| | 5000 s⁻¹, 300 °C | 146 | * | * | * | * | 138 | 133 | * | 127 | 147 |
| HDT-A [°C] | A | 142 | * | * | * | 141 | 140 | 138 | 139 | 138 | 138 |
| HDT-B [°C] | B | 147 | * | * | * | 146 | 145 | 143 | 144 | 143 | 142 |
| Vicat [°C] | | 149 | * | * | * | 148 | 147 | 145 | 146 | 145 | 146 |

| | | | | | | | | | | | |
|---|---|---|---|---|---|---|---|---|---|---|---|
| * nicht bestimmt | | | | | | | | | | | |

Tabelle 4 und 5 zeigen, dass die erfinderischen Beispiele eine Flammschutzklassifizierung von V-0 bei einer Dicke von 1,8 mm erreichen. Die Beispiele 2 bis 4 enthalten verschiedene Farbmittel, das Vergleichsbeispiel 1 hingegen mehr als 4 Gew.-% der pulverförmigen Komponente A1, wodurch letztere nur die Flammschutzklassifizierung V-1 bei einer Dicke von 1,8 mm erreicht. Im Beispiel 5 werden mehr als 4 Gew.-% der pulverförmigen Komponente A1 und Farbmittel eingesetzt, wodurch wieder eine Flammschutzklassifizierung von V-0 bei einer Dicke von 1,8 mm erreicht wird. Der gleiche Effekt auf die Flammschutzklassifizierung ist beim Vergleich der Beispiele 6 und 7 mit dem Vergleichsbeispiel 2 zu erkennen.

**Tabelle 5: Eigenschaften der Zusammensetzungen aus Tabelle 3**

| | | Bsp. 8 | Bsp. 9 | Bsp. 10 | Bsp. 11 | Vgl.-Bsp. 6 | Vgl.-Bsp. 7 |
|---|---|---|---|---|---|---|---|
| UL94-V | 1,8 mm | V-0 | V-0 | V-0 | V-0 | V-0 | V-0 |
| | 1,5 mm | V-2 | V-1 | V-0 | V-0 | V-0 | V-0 |
| UL94-5V | 3,0 mm | * | 5VA | 5VA | 5VA | 5VA | 5VA |
| GWFI [°C] | 3,0 mm | * | 960 | 960 | 960 | 960 | 960 |
| | 1,5 mm | * | 960 | 960 | 960 | 960 | 960 |
| GWIT [°C] | 3,0 mm | * | 860 | 875 | 875 | 900 | 900 |
| | 1,5 mm | * | 860 | 875 | 875 | 900 | 900 |
| MVR | 300 °C; 1,20 kg; 5 min | 5,1 | 4,9 | 5,3 | 6,1 | 6,0 | 6,0 |
| Schmelzeviskosität [Pa s] | 50 s⁻¹, 300 °C | 922 | 905 | 869 | 813 | 883 | 863 |
| | 100 s⁻¹, 300 °C | 753 | 751 | 711 | 678 | 746 | 742 |
| | 200 s⁻¹, 300 °C | 623 | 613 | 579 | 560 | 640 | 636 |
| | 500 s⁻¹, 300 °C | 456 | 467 | 428 | 412 | 506 | 494 |
| | 1000 s⁻¹, 300 °C | 356 | 356 | 327 | 314 | 390 | 380 |
| | 1500 s⁻¹, 300 °C | 294 | 292 | 270 | 259 | 320 | 310 |
| | 5000 s⁻¹, 300 °C | 141 | 138 | 130 | 124 | 148 | 145 |
| HDT-A [°C] | A | 137 | 136 | 134 | 133 | 136 | 135 |
| HDT-B [°C] | B | 146 | 144 | 142 | 141 | 142 | 141 |
| Vicat [°C] | | 146 | 145 | 143 | 142 | 145 | 143 |

| | | | | | | | |
|---|---|---|---|---|---|---|---|
| * nicht bestimmt | | | | | | | |

Die Vergleichsbeispiel 3 bis 5 setzen als Flammschutzmittel C4-Salz ein, das zu den perfluorierten Alkylsubstanzen zählt. Im Vergleich zu den Vergleichsbeispielen 1 und 2 zeigen diese, dass ein auch ohne den Einsatz perfluorierter Alkylsubstanzen eine gute Flammwidrigkeit erreicht wird.

Neben der Flammschutzklassifizierung von V-0 bei 1,8 mm erreichen die erfindungsgemäßen Beispiele auch hohe Glühdrahtentzündungs- und -brennbarkeitstemperaturen von mindestens 850 °C bzw. 960 °C. Darüber hinaus zeigen die erfinderischen Beispiele keine signifikante Änderung in der Wärmeformbeständigkeit, Schmelzeviskosität und im MVR, sodass die Verarbeitungsbedingungen im Vergleich zu den Vergleichsbeispielen nicht verschlechtert sind.

## Patentansprüche

1. Zusammensetzung enthaltend
(A) 40 bis 79,5 Gew.-% lineares Polycarbonat, wobei ein Teil in Pulverform als Komponente A1 vorliegen kann,
(B) 5 bis 50 Gew.-% Polycarbonat mit einem Verzweigungsgrad von 0,8 bis 1,5 mol-%,
(C) 5 bis 40 Gew.-% Glasfasern,
(D) 0,10 bis 0,25 Gew.-% einer Verbindung, ausgewählt aus der Gruppe von Alkali-, Erdalkali- oder Ammoniumsalzen aliphatischer oder aromatischer Sulfonsäure-, Sulfonamid-, oder Sulfonimidderivate und Kombinationen aus diesen,
(G) 0 bis 5 Gew.-% Farbmittel,
wobei, für den Fall, dass mehr als 4 Gew-% der pulverförmige Komponente A1 enthalten sind, der Anteil der Komponente G > 0 Gew.-% ist, und
wobei sich die Gew.-% auf die gesamte Zusammensetzung beziehen.

2. Zusammensetzung nach Anspruch 1, **dadurch gekennzeichnet, dass** Komponente D ein aromatisches Sulfonsäurederivat, bevorzugt ein halogenfreies aromatisches Sulfonsäurederivat ist.

3. Zusammensetzung nach einem der Ansprüchen 1 bis 2, **dadurch gekennzeichnet, dass** Komponente D ausgewählt ist aus der Gruppe bestehend aus Kaliumdiphenylsulfonsulfonat, Dikalium-3,3'-sulfonylbis(benzolsulfonat) und einer Mischung daraus.

4. Zusammensetzung nach einem der Ansprüche 1 bis 3 enthaltend 0,12 bis 0,22 Gew.-%, bevorzugt 0,14 bis 0,20 Gew.-%, besonders bevorzugt 0,16 bis 0,18 Gew.-% der Komponente D.

5. Zusammensetzung nach einem der Ansprüchen 1 bis 4 enthaltend 50 bis 70 Gew.-%, bevorzugt 55 bis 65 Gew.-% der Komponente A.

6. Zusammensetzung nach einem der Ansprüchen 1 bis 5, **dadurch gekennzeichnet, dass** Komponente A einen Kettenabbrecher ausgewählt aus Phenol und p-tert-Butylphenol, bevorzugt p-tert-Butylphenol enthält.

7. Zusammensetzung nach einem der Ansprüche 1 bis 6 zusätzlich enthaltend (E) 0,1 bis 5 Gew.-%, bevorzugt 0,5 bis 4 Gew.-%, besonders bevorzugt 1,0 bis 3 Gew.-%, ganz besonders bevorzugt 1,5 bis 2,5 Gew.-% eines cyclischen Siloxans der Formel (R¹₂SiO)_{y} und /oder eines Siloxans, welches eine trifunktionelle Siloxaneinheit der Formel R²SiO_{3/2} umfasst,
worin R¹ jeweils unabhängig für eine monovalente aliphatische oder aromatische Kohlenwasserstoffgruppe oder eine fluorierte Kohlenwasserstoffgruppe mit jeweils 1 bis 18 Kohlenstoffatomen steht und y eine Zahl von 3 bis 12 ist beziehungsweise worin R² jeweils unabhängig für Wasserstoff, eine monovalente aliphatische oder aromatische Kohlenwasserstoffgruppe mit jeweils 1 bis 18 Kohlenstoffatomen oder eine monovalente Alkoxygruppe mit 1 bis 18 Kohlenstoffatomen steht.

8. Zusammensetzung nach einem der Ansprüche 1 bis 7, **dadurch gekennzeichnet, dass** wenn
a) bis zu 4 Gew-% der pulverförmige Komponente A1 enthalten sind, > 0,1 Gew.-% der Komponente E enthalten ist;
b) mehr als 4 Gew-% der pulverförmige Komponente A1 enthalten sind, > 1 Gew.-% der Komponente E enthalten ist,
wobei sich die Gew.-% auf die gesamte Zusammensetzung beziehen.

9. Zusammensetzung nach einem der Ansprüche 1 bis 8, **dadurch gekennzeichnet, dass** sie zusätzlich 0,01 bis 2 Gew.-%, bevorzugt 0,1 bis 1 Gew.-%, besonders bevorzugt 0,2 bis 0,8 Gew.-%, ganz besonders bevorzugt 0,3 bis 0,6 Gew.-% mindestens ein weiteres Additiv (F) ausgewählt aus der Gruppe, bestehend aus Thermostabilisatoren, Entformungsmitteln, UV-Absorbern, Verträglichkeitsvermittlern, Antioxidantien, IR-Absorbern, Fließverbesserern, Umesterungsstabilisatoren, Additiven für die Lasermarkierung und Schlagzähmodifikatoren enthält.

10. Zusammensetzung nach einem der Ansprüche 1 bis 9 enthaltend 0,001 bis 5 Gew.-%, bevorzugt 0,01 bis 4 Gew.-%, besonders bevorzugt 0,1 bis 3 Gew.-% der Komponente G.

11. Zusammensetzung nach einem der Ansprüche 1 bis 10, **dadurch gekennzeichnet, dass** sie weniger als 0,1 Gew.-%, bevorzugt weniger 0,01 Gew.-%, besonders bevorzugt dass sie kein PTFE enthält.

12. Zusammensetzung nach einem der Ansprüche 1 bis 11, **dadurch gekennzeichnet, dass** sie weniger als 0,1 Gew.-%, bevorzugt weniger 0,01 Gew.-%, besonders bevorzugt dass sie keine halogenierten Flammschutzmittel enthält.

13. Zusammensetzung nach einem der Ansprüche 1 bis 12, **dadurch gekennzeichnet, dass** sie weniger als 1 Gew.-%, bevorzugt weniger als 0,1 Gew.-%, besonders bevorzugt weniger 0,01 Gew.-%, ganz besonders bevorzugt dass sie kein Polysiloxan-Polycarbonat-Blockcokondensat enthält.

14. Zusammensetzung nach einem der Ansprüche 1 bis 13, **dadurch gekennzeichnet, dass** sie aus den Komponenten A bis G besteht.

15. Formkörper enthaltend eine Zusammensetzung gemäß einem der vorhergehenden Ansprüche.
